# EUROPÄISCHE PATENTSCHRIFT

(11) **EP 4 015 152 B1**
(45) Veröffentlichungstag und Bekanntmachung des Hinweises auf die Patenterteilung: **18.10.2023**
(21) Anmeldenummer: 20214890.4
(22) Anmeldetag: 17.12.2020
(51) Int. Cl.: B25F 5/00

(54) **VERFAHREN ZUM AUTOMATISIERTEN ERMITTELN EINER REINIGUNGS-, WARTUNGS- UND/ODER REPARATURINFORMATION FÜR EIN MOTORANGETRIEBENES BEARBEITUNGSWERKZEUG UND SYSTEM ZUM AUTOMATISIERTEN ERMITTELN EINER REINIGUNGS-, WARTUNGS- UND/ODER REPARATURINFORMATION FÜR EIN MOTORANGETRIEBENES BEARBEITUNGSWERKZEUG**
METHOD FOR AUTOMATICALLY DETERMINING CLEANING, MAINTENANCE AND / OR REPAIR INFORMATION FOR A MOTOR-DRIVEN MACHINING TOOL AND SYSTEM FOR AUTOMATICALLY DETERMINING CLEANING, MAINTENANCE AND / OR REPAIR INFORMATION FOR A MOTOR-DRIVEN MACHINING TOOL
PROCÉDÉ DE DÉTERMINATION AUTOMATISÉE DES INFORMATIONS DE NETTOYAGE, D'ENTRETIEN ET/OU DE RÉPARATION POUR UN OUTIL D'USINAGE MOTORISÉ ET SYSTÈME DE DÉTERMINATION AUTOMATISÉE DES INFORMATIONS DE NETTOYAGE, D'ENTRETIEN ET/OU DE RÉPARATION POUR UN OUTIL D'USINAGE MOTORISÉ

(43) Veröffentlichungstag der Anmeldung: 22.06.2022
(73) Patentinhaber: Andreas Stihl AG & Co. KG, 71336 Waiblingen (DE)
(72) Erfinder: BÖKER, Robert, 71336 Waiblingen (DE); BLÄSI, Jörg, 73061 Ebersbach (DE)
(74) Vertreter: Patentanwälte Ruff, Wilhelm, Beier, Dauster & Partner mbB

(56) Entgegenhaltungen:
- EP-A1- 3 424 301
- DE-A1-102017 203 685
- DE-U1-202018 105 999

## Beschreibung

### ANWENDUNGSGEBIET UND STAND DER TECHNIK

Die Erfindung bezieht sich auf ein Verfahren zum automatisierten Ermitteln einer Reinigungs-, Wartungs- und/oder Reparaturinformation für ein motorangetriebenes Bearbeitungswerkzeug und ein System zum automatisierten Ermitteln einer Reinigungs-, Wartungs- und/oder Reparaturinformation für ein motorangetriebenes Bearbeitungswerkzeug.

### AUFGABE UND LÖSUNG

Ein Verfahren bzw. ein System zum automatisierten Ermitteln einer Reinigungs-, Wartungs- und/oder Reparaturinformation für ein motorangetriebenes Bearbeitungswerkzeug, wobei das Bearbeitungswerkzeug von außen optisch erfassbar einen Rückstand verursacht während des Betriebs des Bearbeitungswerkzeugs aufweist, wobei das Verfahren die Schritte aufweist:
- ) Bestimmen der Reinigung-, Wartungs- und/oder Reparaturinformation basierend auf der Klassierung, und
- ) Ausgeben der bestimmten Reinigung-, Wartungs- und/oder Reparaturinformation, ist bereits aus der EP 3 424 301 A1 bekannt.

Der Erfindung liegt als Aufgabe die Bereitstellung eines Verfahrens zum automatisierten Ermitteln einer Reinigungs-, Wartungs- und/oder Reparaturinformation für ein motorangetriebenes Bearbeitungswerkzeug und eines Systems zum automatisierten Ermitteln einer Reinigungs-, Wartungs- und/oder Reparaturinformation für ein motorangetriebenes Bearbeitungswerkzeug zugrunde, insbesondere das jeweils verbesserte Eigenschaften aufweist.

Die Erfindung löst diese Aufgabe durch die Bereitstellung eines Verfahrens mit den Merkmalen des Anspruchs 1 und/oder eines Systems mit den Merkmalen des Anspruchs 12. Vorteilhafte Weiterbildungen und/oder Ausgestaltungen der Erfindung sind in den abhängigen Ansprüchen beschrieben.

Das erfindungsgemäße Verfahren ist zum automatisierten Ermitteln bzw. Bestimmen einer Reinigungs-, Wartungs- und/oder Reparaturinformation, insbesondere eines Inhalts der Reinigungs-, Wartungs- und/oder Reparaturinformation, für ein motorangetriebenes Bearbeitungswerkzeug bzw. -gerät ausgebildet bzw. konfiguriert bzw. vorgesehen. Das Bearbeitungswerkzeug hat bzw. weist von außen bzw. außerhalb, insbesondere des Bearbeitungswerkzeugs, optisch erfassbar einen Rückstand verursacht während des Betriebs, insbesondere durch den Betrieb, des Bearbeitungswerkzeugs auf. Das Verfahren umfasst bzw. weist die Schritte auf: a) Optisches Erfassen, insbesondere automatisiertes Erfassen, des Rückstands, insbesondere auf dem Bearbeitungswerkzeug und/oder von außen. b) Klassieren, insbesondere automatisiertes Klassieren, bzw. Klassifizieren bzw. Einordnen bzw. Erkennen des, insbesondere optisch, erfassten Rückstands nach einer Art bzw. einer Gattung des Rückstands, c) Bestimmen, insbesondere automatisiertes Bestimmen, der Reinigung-, Wartungs- und/oder Reparaturinformation basierend auf der Klassierung bzw. dem Klassieren bzw. der klassierten Art. d) Ausgeben, insbesondere automatisiertes Ausgeben, der bestimmten Reinigung-, Wartungs- und/oder Reparaturinformation, insbesondere an bzw. für einen Benutzer und/oder einen Reparateur des Bearbeitungswerkzeugs.

Dies, insbesondere das optische Erfassen des Rückstands und das Klassieren dieses nach der Art des Rückstands, ermöglicht das Bestimmen der Reinigung-, Wartungs- und/oder Reparaturinformation mittelbar. In anderen Worten: Dies ermöglicht, dass die Reinigung-, Wartungs- und/oder Reparaturinformation nicht unmittelbar bestimmt werden braucht, insbesondere durch ein Demontieren des Bearbeitungswerkzeugs. Somit ermöglicht dies ein zeitlich schnelles und/oder einfaches Bestimmen der Reinigung-, Wartungs- und/oder Reparaturinformation.

Zusätzlich oder alternativ ermöglicht dies, insbesondere das Ausgeben der bestimmten Reinigung-, Wartungs- und/oder Reparaturinformation, dass eine Reinigung, eine Wartung und/oder eine Reparatur des Bearbeitungswerkzeugs zeitlich schnell, insbesondere und somit kostengünstig, ausgeführt werden kann, insbesondere durch den Benutzer und/oder den Reparateur.

Weiter zusätzlich ermöglicht dies, insbesondere die Reinigungsinformation, dem Benutzer zu erkennen, dass eine Reinigung, die möglicherweise durch den Benutzer ausgeführt werden kann, insbesondere zunächst, ausreichend sein kann, und/oder dies, insbesondere die Wartungs- und/oder Reparaturinformation, ermöglicht dem Benutzer zu erkennen, dass eine Wartung und/oder eine Reparatur, die möglicherweise durch den Benutzer nicht ausgeführt werden sollte/n bzw. können/kann und/oder durch den Reparateur ausgeführt werden sollte/n und/oder brauchen/t, erforderlich sein kann.

Weiter zusätzlich oder alternativ ermöglicht dies, insbesondere die Reinigung-, Wartungs- und/oder Reparaturinformation, rechtzeitig nach dem Bearbeitungswerkzeug zu schauen bzw. sich um dieses zu kümmern, insbesondere zeitlich vor für das Bearbeitungswerkzeug eine größere Reinigung, eine größere Wartung und/oder eine größere Reparatur erforderlich sein können/kann, insbesondere aufgrund eines nicht-rechtzeitigen bzw. zu späten Nachschauens oder Kümmerns.

Insbesondere kann das Bearbeitungswerkzeug ein bodengeführtes und/oder handgeführtes, insbesondere handgetragenes, Bearbeitungswerkzeug sein. Insbesondere kann handgeführtes, insbesondere handgetragenes, Bearbeitungswerkzeug bedeuten, dass das Bearbeitungswerkzeug eine Masse von maximal 50 kg (Kilogramm), insbesondere von maximal 20 kg, insbesondere von maximal 10 kg, insbesondere von maximal 5 kg, und/oder von minimal 1 kg, insbesondere von minimal 2 kg, aufweisen kann. Zusätzlich oder alternativ kann das Bearbeitungswerkzeug ein Garten-, Forst- und/oder Baubearbeitungswerkzeug und/oder ein Schneidwerkzeug sein.

Der Rückstand kann einen Mindestumfang bzw. eine Mindestausmaß aufweisen bzw. haben. Zusätzlich oder alternativ kann der Rückstand bzw. seine Art derart sein, dass das Bestimmen der Reinigung-, Wartungs- und/oder Reparaturinformation ermöglicht sein kann. In anderen Worten: Der Rückstand bzw. seine Art kann für eine Reinigung, eine Wartung und/oder eine Reparatur des Bearbeitungswerkzeugs relevant sein.

Basierend auf dem Rückstand bzw. seiner Art bzw. seiner Klassierung kann die Reinigung-, Wartungs- und/oder Reparaturinformation, insbesondere der Inhalt der Reinigung-, Wartungs- und/oder Reparaturinformation, ermittelt werden und basierend auf einem verschiedenartigen Rückstand bzw. einer verschiedenen Art bzw. einer verschiedenen Klassierung kann eine verschiedene Reinigung-, Wartungs- und/oder Reparaturinformation, insbesondere ein verschiedener Inhalt der Reinigung-, Wartungs- und/oder Reparaturinformation, ermittelt werden.

Der Schritt a) bzw. das optische Erfassen kann ein Aufnehmen eines Bilds des Rückstands aufweisen, insbesondere sein. Zusätzlich oder alternativ kann der Schritt b) bzw. das Klassieren mittels Bilderkennung, insbesondere Merkmalsextraktion und/oder -reduktion, und/oder Bildvergleichs und/oder einer, insbesondere elektronischen, Datenbank bzw. einer Cloud und/oder eines künstlichen neuronalen Netzes ausgeführt werden. Weiter zusätzlich oder alternativ kann der Schritt c) bzw. das Bestimmen mittels einer, insbesondere elektronischen, Datenbank bzw. einer Cloud ausgeführt werden. Weiter zusätzlich oder alternativ kann das Ausgeben, insbesondere des Schritts d), ein akustisches und/oder optisches Ausgeben, insbesondere ein Anzeigen, aufweisen, insbesondere sein.

Der Schritt b) kann zeitlich nach dem Schritt a) ausgeführt werden. Zusätzlich oder alternativ kann der Schritt c) zeitlich nach dem Schritt b) ausgeführt werden. Weiter zusätzlich oder alternativ kann der Schritt d) zeitlich nach dem Schritt c) ausgeführt werden.

In einer Weiterbildung der Erfindung umfasst bzw. weist das Bearbeitungswerkzeug, insbesondere ein Motorantriebssystem des Bearbeitungswerkzeugs, verschiedenartige bzw. verschiedene Arten von Komponenten auf. Je nach Art des Rückstands und/oder Klassierung ist die Reinigung-, Wartungs- und/oder Reparaturinformation, insbesondere der Inhalt der Reinigung-, Wartungs- und/oder Reparaturinformation, dadurch verschieden, dass die Reinigung-, Wartungs- und/oder Reparaturinformation, insbesondere nur, eine der, insbesondere Arten von, Komponenten betreffend, insbesondere artspezifisch, ist. Dies ermöglicht, dass eine Reinigung, eine Wartung und/oder eine Reparatur des Bearbeitungswerkzeugs zielgerichtet bzw. wirksam sein kann. Insbesondere können für verschiedene Arten von Rückständen, insbesondere jeweilige, verschiedene Arten von Komponenten, insbesondere typischerweise, reinigungs-, wartungs- und/oder reparaturbedürftig sein. Zusätzlich oder alternativ kann für einen Rückstand bzw. seine Art bzw. seine Klassierung die Reinigung-, Wartungs- und/oder Reparaturinformation eine der, insbesondere Arten von, Komponenten betreffend, insbesondere artspezifisch, sein und für einen verschiedenartigen Rückstand bzw. eine verschiedene Art bzw. eine verschiedene Klassierung kann die Reinigung-, Wartungs- und/oder Reparaturinformation eine verschiedene der, insbesondere Arten von, Komponenten betreffend, insbesondere artspezifisch, sein. Weiter zusätzlich oder alternativ kann das Motorantriebssystem ein Verbrennungsmotorantriebssystem und/oder ein Elektromotorantriebssystem sein.

In einer Ausgestaltung der Erfindung umfassen bzw. weisen die verschiedenen Arten von Komponenten eine Luft- und/oder Kühl-Komponente, insbesondere einen Vorabscheider bzw. einen Vorfilter an einem Lüfterrad und/oder einen Kühlkörper, insbesondere Kühlrippen, an einem Motorzylinder, eine Ventil- und/oder Dichtungs-Komponente, insbesondere ein Kraftstoffeinlassventil und/oder eine Radialwellendichtung, und/oder eine Luftführungs-Komponente, insbesondere an einem Lufteinlass, insbesondere für Frischluft, und/oder einem Motorzylinder und/oder einem Schalldämpfer, auf. Eine derartige Komponente kann durch einen Rückstand, insbesondere an und/oder in der Komponente, derselben Art wie der von außen optisch erfassbare Rückstand, insbesondere typischerweise, betroffen sein. Insbesondere können die Komponenten als Komponenten-Arten bezeichnet werden. Zusätzlich oder alternativ kann der Motorzylinder ein Motorzylinder eines Verbrennungsantriebsmotors des Motorantriebssystems, insbesondere des Verbrennungsmotorantriebssystems, sein. Weiter zusätzlich oder alternativ kann die Luftführungs-Komponente eine Kühlluftführungs-Komponente sein.

In einer Weiterbildung der Erfindung umfasst bzw. weist das Bearbeitungswerkzeug, insbesondere ein Motorantriebssystem des Bearbeitungswerkzeugs, eine Anzahl, insbesondere eine Mehrzahl, von Komponenten auf. Die Anzahl von Komponenten ist in einem bestimmungsgemäßen Betriebs- bzw. Bearbeitungszustand des Bearbeitungswerkzeugs, insbesondere durch ein Gehäuse des Bearbeitungswerkzeugs mindestens teilweise oder vollständig abgedeckt, von außen optisch nicht erfassbar bzw. nicht sichtbar. Die Reinigung-, Wartungs- und/oder Reparaturinformation ist, insbesondere nur, eine der Anzahl von Komponenten betreffend. Das Verfahren ermöglicht basierend auf dem Rückstand, insbesondere auf dem Bearbeitungswerkzeug und/oder von außen optisch erfassbar, das Bestimmen der Reinigung-, Wartungs- und/oder Reparaturinformation eine der Anzahl von Komponenten betreffend, insbesondere ohne ein Demontieren des Gehäuses. Somit ermöglicht dies ein zeitlich schnelles und/oder einfaches Bestimmen der Reinigung-, Wartungs- und/oder Reparaturinformation. Insbesondere kann das Motorantriebssystem ein Verbrennungsmotorantriebssystem und/oder ein Elektromotorantriebssystem sein. Zusätzlich oder alternativ kann das Gehäuse ein Außengehäuse sein. Weiter zusätzlich oder alternativ kann der Rückstand auf dem Gehäuse sein. Weiter zusätzlich oder alternativ kann eine der Anzahl von Komponenten durch einen Rückstand, insbesondere an und/oder in der Komponente, derselben Art wie der von außen optisch erfassbare Rückstand betroffen sein.

In einer Weiterbildung der Erfindung ist der Rückstand eines Werkstoffs eines Werkstücks verursacht durch eine Bearbeitung des Werkstücks mittels des Bearbeitungswerkzeugs. Insbesondere kann das Werkstück ein Pflanzenstück, insbesondere ein Baum und/oder ein Holzstück, sein.

In einer Weiterbildung, insbesondere einer Ausgestaltung, der Erfindung ist der Rückstand aus einer Menge von verschiedenen Arten von Rückständen. Die verschiedenen Arten von Rückständen umfassen bzw. weisen einen Pflanzensaft-Rückstand, insbesondere ein Harz, insbesondere in Verbindung mit einem pflanzlichen Staub, einen abrasiven Staub-Rückstand, insbesondere einen mineralischen Staub, und/oder einen Pflanzenfaser- und/oder Pflanzenspan-Rückstand, insbesondere in Verbindung mit einem durch eine Pflanze gesammelten Schmutz, auf. Ein derartiger Rückstand derselben Art wie der von außen optisch erfassbare Rückstand kann das Bearbeitungswerkzeug, insbesondere eine seiner verschiedenen Arten von Komponenten, insbesondere an und/oder in der Komponente, insbesondere typischerweise, betreffen. Insbesondere kann ein Rückstand derselben Art wie der Pflanzensaft-Rückstand die Luft- und/oder Kühl-Komponente, insbesondere bis zu dem Motorzylinder hin und/oder an diesem, betreffen. Zusätzlich oder alternativ kann ein Rückstand derselben Art wie der abrasive Staub-Rückstand die Ventil- und/oder Dichtungs-Komponente betreffen. Weiter zusätzlich oder alternativ kann ein Rückstand derselben Art wie der Pflanzenfaser- und/oder Pflanzenspan-Rückstand die Luftführungs-Komponente, insbesondere an dem Motorzylinder und/oder von diesem weg, betreffen. Weiter zusätzlich oder alternativ kann der pflanzliche Staub ein Holzstaub sein. Weiter zusätzlich oder alternativ kann der Pflanzenfaser- und/oder Pflanzenspan-Rückstand ein Holzfaser- und/oder Holzspan-Rückstand sein. Weiter zusätzlich oder alternativ kann basierend auf dem Pflanzensaft-Rückstand und/oder dem Pflanzenfaser- und/oder Pflanzenspan-Rückstand die Reinigungsinformation bestimmt werden. Weiter zusätzlich oder alternativ kann basierend auf dem abrasiven Staub-Rückstand die Wartungs- und/oder Reparaturinformation bestimmt werden. Weiter zusätzlich oder alternativ können die Rückstände als Rückstands-Arten bezeichnet werden.

In einer Weiterbildung der Erfindung ist das Bearbeitungswerkzeug eine Säge, ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer, eine Grasschere, ein Häcksler, ein Gesteinsschneider, ein Hochdruckreiniger oder ein Spritz- und/oder Sprühgerät. Ein derartiges Bearbeitungswerkzeug kann den Rückstand von außen optisch erfassbar verursacht während des Betriebs des Bearbeitungswerkzeugs, insbesondere typischerweise, aufweisen.

In einer Weiterbildung der Erfindung umfasst bzw. weist das Verfahren den Schritt auf: Ermitteln, insbesondere automatisiertes Ermitteln und/oder Erfassen, eines Typs bzw. einer Art des Bearbeitungswerkzeugs, insbesondere durch den Benutzer und/oder den Reparateur. Der Schritt c) umfasst bzw. weist auf: Bestimmen der Reinigung-, Wartungs- und/oder Reparaturinformation basierend auf dem ermittelten Typ des Bearbeitungswerkzeugs. Insbesondere kann das Ermitteln des Typs des Bearbeitungswerkzeugs aufweisen: Auswählen, insbesondere nur, des Typs des Bearbeitungswerkzeugs aus einer Menge von verschiedenen Typen von motorangetriebenen Bearbeitungswerkzeugen, insbesondere durch den Benutzer und/oder den Reparateur.

In einer Weiterbildung der Erfindung umfasst bzw. weist das Verfahren den Schritt auf: Ermitteln, insbesondere automatisiertes Ermitteln und/oder Erfassen, von Diagnosedaten, insbesondere eines Werts der Diagnosedaten und/oder Fehlerdaten, des Bearbeitungswerkzeugs. Die ermittelten Diagnosedaten sind zu dem erfassten Rückstand und/oder der Klassierung komplementär bzw. von diesem und/oder dieser unabhängig. Der Schritt c) umfasst bzw. weist auf: Bestimmen der Reinigung-, Wartungs- und/oder Reparaturinformation mittels, insbesondere automatisierten und/oder logischen, Verknüpfens der ermittelten Diagnosedaten und der Klassierung. Dies ermöglicht ein besonders genaues Bestimmen der Reinigung-, Wartungs- und/oder Reparaturinformation. Insbesondere können die Diagnosedaten derart sein, dass das Bestimmen der Reinigung-, Wartungs- und/oder Reparaturinformation ermöglicht sein kann. In anderen Worten: Die Diagnosedaten können für eine Reinigung, eine Wartung und/oder eine Reparatur des Bearbeitungswerkzeugs relevant sein. Zusätzlich oder alternativ kann basierend auf den Diagnosedaten die Reinigung-, Wartungs- und/oder Reparaturinformation, insbesondere der Inhalt der Reinigung-, Wartungs- und/oder Reparaturinformation, ermittelt werden und basierend auf verschiedenen Diagnosedaten kann eine verschiedene Reinigung-, Wartungs- und/oder Reparaturinformation, insbesondere ein verschiedener Inhalt der Reinigung-, Wartungs- und/oder Reparaturinformation, ermittelt werden. Weiter zusätzlich oder alternativ können die Diagnosedaten gespeichert sein. Weiter zusätzlich oder alternativ können die Diagnosedaten kabellos übertragen werden und/oder ohne ein Demontieren des Bearbeitungswerkzeugs, insbesondere des Gehäuses, ermittelt und/oder übertragen werden.

In einer Weiterbildung, insbesondere einer Ausgestaltung, der Erfindung umfasst bzw. weist der Schritt c) auf: Selektieren, insbesondere automatisiertes Selektieren, der Reinigung-, Wartungs- und/oder Reparaturinformation, insbesondere des Inhalts der Reinigung-, Wartungs- und/oder Reparaturinformation, aus einer Menge von verschiedenen Reinigung-, Wartungs- und/oder Reparaturinformationen, insbesondere verschiedenen Inhalten der Reinigung-, Wartungs- und/oder Reparaturinformationen. Den Reinigung-, Wartungs- und/oder Reparaturinformationen sind jeweils eine Art eines Rückstands aus einer Menge von verschiedenen Arten von Rückständen, insbesondere und ein Typ eines Bearbeitungswerkzeugs aus einer Menge von verschiedenen Typen von Bearbeitungswerkzeugen und/oder Diagnosedaten, insbesondere ein Wert der Diagnosedaten, aus einer Menge von verschiedenen Diagnosedaten, insbesondere verschiedenen Werten der Diagnosedaten, zugeordnet. Dies ermöglicht das Bestimmen der Reinigung-, Wartungs- und/oder Reparaturinformation basierend auf der Klassierung, insbesondere und dem ermittelten Typ des Bearbeitungswerkzeugs insbesondere und/oder der ermittelten Diagnosedaten.

In einer Ausgestaltung der Erfindung umfasst bzw. weist das Verfahren die Schritte auf: Ermitteln, insbesondere automatisiertes Ermitteln und/oder Erfassen, einer wirksamen bzw. wirkungsvollen bzw. nützlichen bzw. hilfreichen, insbesondere tatsächlichen, Reinigung-, Wartungs- und/oder Reparaturinformation, insbesondere durch den Benutzer und/oder den Reparateur, insbesondere zeitlich mit und/oder zeitlich nach der Reinigung, der Wartung und/oder der Reparatur. Zuordnen, insbesondere automatisiertes Zuordnen, der Art des Rückstands zu der ermittelten wirksamen Reinigung-, Wartungs- und/oder Reparaturinformation für ein, insbesondere zeitlich, nächstes Ausführen des Verfahrens. Dies ermöglicht das Verfahren, insbesondere nach und nach, zu verfeinern. Insbesondere kann das Ermitteln der wirksamen Reinigung-, Wartungs- und/oder Reparaturinformation ein Bestätigen oder ein Ändern der bestimmten, insbesondere und ausgegebenen, Reinigung-, Wartungs- und/oder Reparaturinformation aufweisen.

In einer Weiterbildung, insbesondere einer Ausgestaltung, der Erfindung umfasst bzw. weist die Reinigung-, Wartungs- und/oder Reparaturinformation eine Reinigung-, Wartungs- und/oder Reparaturhandlungsanweisung und/oder ein, insbesondere mögliches bzw. wahrscheinliches, Ersatzteil, insbesondere eine Nennung des Ersatzteils, für das Bearbeitungswerkzeug und/oder ein, insbesondere mögliches bzw. wahrscheinliches, Fehlersymptom, insbesondere eine Nennung des Fehlersymptoms, und/oder eine, insbesondere mögliche bzw. wahrscheinliche, Fehlerursache, insbesondere eine Nennung der Fehlerursache, des Bearbeitungswerkzeugs und/oder die, insbesondere mögliche bzw. wahrscheinlich, betroffene Komponente, insbesondere eine Nennung der Komponente, auf. Dies ermöglicht, dass eine Wartung und/oder eine Reparatur des Bearbeitungswerkzeugs fach- und/oder zielgerichtet bzw. wirksam sein kann.

Das erfindungsgemäße, insbesondere elektrische, System ist zum automatisierten Ermitteln einer, insbesondere der, Reinigungs-, Wartungs- und/oder Reparaturinformation für ein motorangetriebenes, insbesondere das motorangetriebene, Bearbeitungswerkzeug ausgebildet bzw. konfiguriert. Das Bearbeitungswerkzeug weist von außen optisch erfassbar einen, insbesondere den, Rückstand verursacht während des Betriebs des Bearbeitungswerkzeugs auf. Das System umfasst bzw. weist eine, insbesondere elektrische, optische Erfassungseinrichtung, eine, insbesondere elektrische, Klassierungseinrichtung, eine, insbesondere elektrische, Bestimmungseinrichtung und eine, insbesondere elektrische, Ausgabeeinrichtung auf. Die optische Erfassungseinrichtung ist zum optischen Erfassen des Rückstands ausgebildet bzw. konfiguriert. Die Klassierungseinrichtung ist zum Klassieren des erfassten Rückstands nach einer, insbesondere der, Art des Rückstands ausgebildet bzw. konfiguriert. Die Bestimmungseinrichtung ist zum Bestimmen der Reinigung-, Wartungs- und/oder Reparaturinformation basierend auf der Klassierung ausgebildet bzw. konfiguriert. Die Ausgabeeinrichtung ist zum Ausgeben der bestimmten Reinigung-, Wartungs- und/oder Reparaturinformation ausgebildet bzw. konfiguriert.

Das System kann die gleichen Vorteile ermöglichen wie das vorhergehend genannte Verfahren.

Insbesondere kann das System zum, insbesondere automatisierten, Ausführen des Verfahrens ausgebildet bzw. konfiguriert sein.

Die Erfassungseinrichtung kann eine, insbesondere elektrische und/oder digitale, Kamera aufweisen, insbesondere sein.

Die Klassierungseinrichtung kann eine, insbesondere elektrische, Bilderkennungs- und/oder Bildvergleichseinrichtung und/oder eine, insbesondere elektronische, Datenbank bzw. eine Cloud aufweisen. Zusätzlich oder alternativ kann die Klassierungseinrichtung eine Rechen- und/oder Speichereinheit aufweisen.

Die Bestimmungseinrichtung kann eine, insbesondere elektronische, Datenbank bzw. eine Cloud aufweisen. Zusätzlich oder alternativ kann die Bestimmungseinrichtung eine Rechen- und/oder Speichereinheit aufweisen.

Die Ausgabeeinrichtung kann einen Schallerzeuger, insbesondere einen Lautsprecher, und/oder eine Anzeige aufweisen.

Die Erfassungseinrichtung, die Klassierungseinrichtung, die Bestimmungseinrichtung und/oder die Ausgabeeinrichtung können/kann, insbesondere jeweils, getrennt von dem Bearbeitungswerkzeug ausgebildet sein. In anderen Worten: Die Erfassungseinrichtung, die Klassierungseinrichtung, die Bestimmungseinrichtung und/oder die Ausgabeeinrichtung brauchen/t, insbesondere jeweils, kein Bestandteil des Bearbeitungswerkzeugs sein.

In einer Weiterbildung der Erfindung umfasst bzw. weist das System ein, insbesondere elektrisches, mobiles, insbesondere portables bzw. handgetragenes, Gerät auf. Das Gerät umfasst bzw. weist die optische Erfassungseinrichtung und/oder die Ausgabeeinrichtung auf. Das mobile Ermittlungsgerät ermöglicht ein benutzerfreundliches Mitführen. Insbesondere kann das mobile Gerät ein Smartphone und/oder eine Smartwatch aufweisen, insbesondere sein. Zusätzlich oder alternativ kann das mobile Gerät getrennt von dem Bearbeitungswerkzeug ausgebildet sein. In anderen Worten: Das mobile Gerät braucht kein Bestandteil des Bearbeitungswerkzeugs sein. Weiter zusätzlich oder alternativ kann das mobile Gerät die Klassierungseinrichtung und/oder die Bestimmungseinrichtung aufweisen.

In einer Weiterbildung der Erfindung umfasst bzw. weist das System das Bearbeitungswerkzeug und/oder ein, insbesondere das, Ersatzteil für das Bearbeitungswerkzeug auf.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine schematische Ansicht eines erfindungsgemäßen Verfahrens und eines erfindungsgemäßen Systems,
- Fig. 2: eine schematische Ansicht eines Teils des Verfahrens der Fig. 1 und einer optischen Erfassungseinrichtung und einer Ausgabeeinrichtung des Systems der Fig. 1,
- Fig. 3: eine weitere schematische Ansicht eines Teils des Verfahrens der Fig. 1 und einer Klassierungseinrichtung und einer Bestimmungseinrichtung des Systems der Fig. 1,
- Fig. 4: eine nochmals weitere schematische Ansicht eines Teils des Verfahrens der Fig. 1 und einer weiteren Ausgabeeinrichtung des Systems der Fig. 1 und einer Ventil- und/oder Dichtungs-Komponente, insbesondere eines Kraftstoffeinlassventils und/oder einer Radialwellendichtung, eines Bearbeitungswerkzeugs des Systems der Fig. 1 betroffen von einem abrasiven Staub-Rückstand,
- Fig. 5: eine schematische Ansicht eines Pflanzensaft-Rückstands, insbesondere eines Harzes, insbesondere in Verbindung mit einem pflanzlichen Staub, von außen optisch erfassbar auf dem Bearbeitungswerkzeug der Fig. 1,
- Fig. 6: eine schematische Ansicht einer Luft- und/oder Kühl-Komponente, insbesondere eines Vorabscheiders an einem Lüfterrad und/oder eines Kühlkörpers', insbesondere von Kühlrippen, an einem Motorzylinder, des Bearbeitungswerkzeugs der Fig. 1 betroffen von einem Pflanzensaft-Rückstand,
- Fig. 7: eine schematische Ansicht eines abrasiven Staub-Rückstands, insbesondere eines mineralischen Staubs, von außen optisch erfassbar auf dem Bearbeitungswerkzeug der Fig. 1,
- Fig. 8: eine schematische Ansicht eines Pflanzenfaser-Rückstands, insbesondere in Verbindung mit einem durch eine Pflanze gesammelten Schmutz, von außen optisch erfassbar auf dem Bearbeitungswerkzeug der Fig. 1,
- Fig. 9: eine schematische Ansicht einer Luftführungs-Komponente, insbesondere an einem Motorzylinder, des Bearbeitungswerkzeugs der Fig. 1 betroffen von einem Pflanzenfaser-Rückstand,
- Fig. 10: eine schematische Ansicht eines Bearbeitens einer Pflanze, insbesondere eines Pflegens einer Palme, mittels des Bearbeitungswerkzeugs der Fig. 1, verursachend einen Pflanzenfaser-Rückstand,
- Fig. 11: eine schematische Ansicht eines Pflanzenspan-Rückstands von außen optisch erfassbar auf dem Bearbeitungswerkzeug der Fig. 1, und
- Fig. 12: eine schematische Ansicht einer Luftführungs-Komponente, insbesondere an einem Motorzylinder und/oder einem Schalldämpfer, des Bearbeitungswerkzeugs der Fig. 1 betroffen von einem Pflanzenspan-Rückstand.

### DETAILLIERTE BESCHREIBUNG DER AUSFÜHRUNGSBEISPIELE

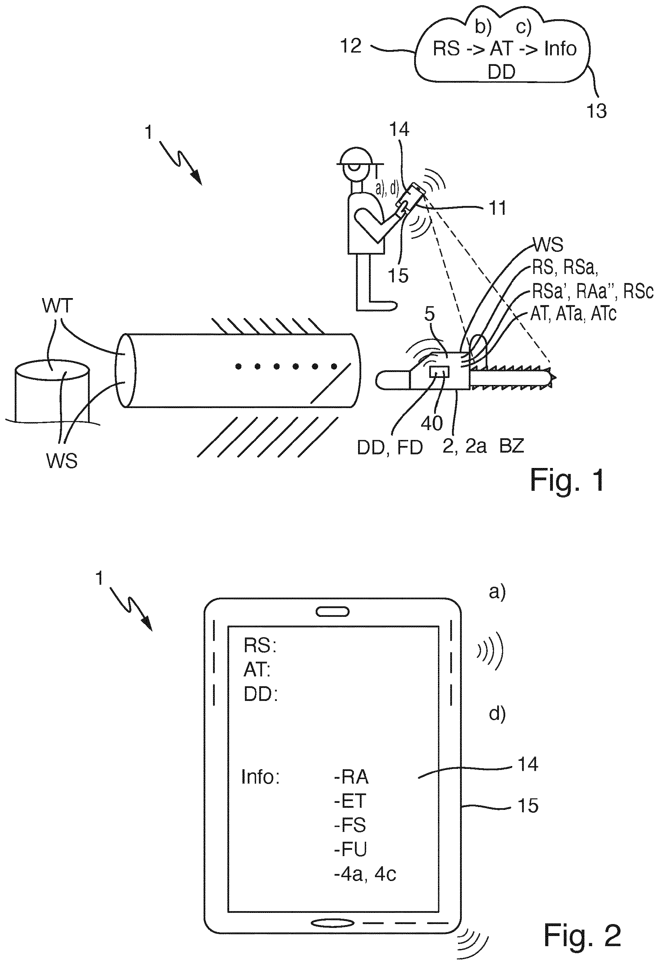

Fig. 1 bis 4 zeigen ein erfindungsgemäßes System 1 und ein erfindungsgemäßes Verfahren zum automatisierten Ermitteln einer Reinigungs-, Wartungs- und/oder Reparaturinformation Info für ein motorangetriebenes Bearbeitungswerkzeug 2, wie in Fig. 1 und 4 bis 12 gezeigt. Das Bearbeitungswerkzeug 2 weist von außen optisch erfassbar einen Rückstand RS verursacht während des Betriebs des Bearbeitungswerkzeugs 2 auf.

Das System 1 weist eine optische Erfassungseinrichtung 11, eine Klassierungseinrichtung 12, eine Bestimmungseinrichtung 13 und eine Ausgabeeinrichtung 14, in dem gezeigten Ausführungsbeispiel zwei Ausgabeeinrichtungen 14, auf. Die optische Erfassungseinrichtung 11 ist zum optischen Erfassen des Rückstands RS ausgebildet, insbesondere erfasst optisch. Die Klassierungseinrichtung 12 ist zum Klassieren des erfassten Rückstands RS nach einer Art AT des Rückstands RS ausgebildet, insbesondere klassiert. Die Bestimmungseinrichtung 13 ist zum Bestimmen der Reinigung-, Wartungs- und/oder Reparaturinformation Info basierend auf der Klassierung ausgebildet, insbesondere bestimmt. Die Ausgabeeinrichtung 14 ist zum Ausgeben der bestimmten Reinigung-, Wartungs- und/oder Reparaturinformation Info ausgebildet, insbesondere gibt aus.

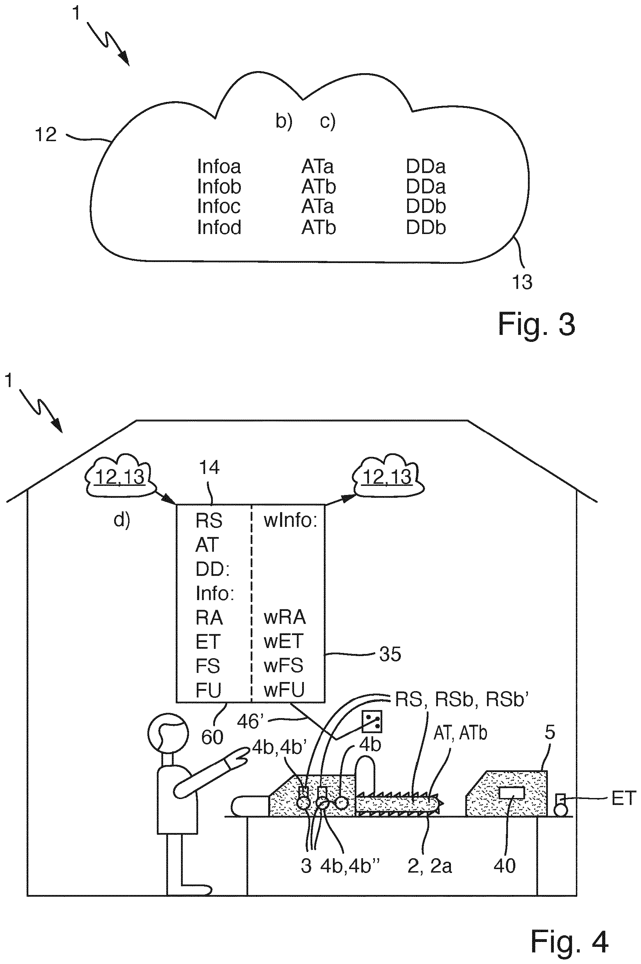

Das Verfahren weist die Schritte auf: a) Optisches Erfassen des Rückstands RS, insbesondere Aufnehmen eines Bilds des Rückstands RS, insbesondere mittels der optischen Erfassungseinrichtung 11, wie in Fig. 1 und 2 gezeigt. b) Klassieren des erfassten Rückstands RS nach der Art AT des Rückstands RS, insbesondere mittels Bilderkennung und/oder Bildvergleichs, insbesondere mittels der Klassierungseinrichtung 12, wie in Fig. 1 und 3 gezeigt. c) Bestimmen der Reinigung-, Wartungs- und/oder Reparaturinformation Info basierend auf der Klassierung, insbesondere mittels der Bestimmungseinrichtung 13, wie in Fig. 1 und 3 gezeigt. d) Ausgeben, insbesondere Anzeigen, der bestimmten Reinigung-, Wartungs- und/oder Reparaturinformation Info, insbesondere mittels der Ausgabeeinrichtung 14, insbesondere an bzw. für einen Benutzer und/oder einen Reparateur des Bearbeitungswerkzeugs 2, wie in Fig. 1, 2 und 4 gezeigt.

Im Detail weist das System 1 ein mobiles Gerät 15, insbesondere ein Smartphone, auf. Das Gerät 15 weist die optische Erfassungseinrichtung 11 und/oder die Ausgabeeinrichtung 14, in dem gezeigten Ausführungsbeispiel eine der Ausgabeeinrichtungen 14, insbesondere eine Anzeige, auf.

Des Weiteren weist das System 1 ein, insbesondere stationäres, Gerät 35, insbesondere einen Computer, auf, insbesondere in einer Werkstatt, wie in Fig. 4 gezeigt. Das Gerät 35 weist eine der Ausgabeeinrichtungen 14, insbesondere eine Anzeige, auf.

Außerdem ist die Erfassungseinrichtung 11 eine Kamera.

Weiter ist die Klassierungseinrichtung 12 eine Bilderkennungs- und/oder Bildvergleichseinrichtung und/oder die Klassierungseinrichtung 12 und die Bestimmungseinrichtung 13 sind ein Cloud-Server.

Zudem sind die Erfassungseinrichtung 11 und die Klassierungseinrichtung 12, insbesondere und die Bestimmungseinrichtung 13, zum, insbesondere kabellosen, Übertragen des Rückstands RS, insbesondere des Bilds des Rückstands RS, ausgebildet, insbesondere übertragen.

Des Weiteren sind die Bestimmungseinrichtung 13, insbesondere und die Klassierungseinrichtung 12, zum, insbesondere kabellosen, Übertragen der bestimmten Reinigung-, Wartungs- und/oder Reparaturinformation Info ausgebildet, insbesondere übertragen.

Außerdem weist das System 1 das Bearbeitungswerkzeug 2 auf.

In dem gezeigten Ausführungsbeispiel ist das Bearbeitungswerkzeug 2 eine Säge 2a. In alternativen Ausführungsbeispielen kann das Bearbeitungswerkzeug ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer, eine Grasschere, ein Häcksler, ein Gesteinsschneider, ein Hochdruckreiniger oder ein Spritz- und/oder Sprühgerät sein.

Weiter weist das Bearbeitungswerkzeug 2, insbesondere ein Motorantriebssystem 3 des Bearbeitungswerkzeugs 2, verschiedene Arten von Komponenten 4a, 4b, 4c auf, wie in Fig. 4, 6, 9 und 12 gezeigt. Je nach Art ATa, ATb, ATc des Rückstands RSa, RSb, RSc und/oder Klassierung ist die Reinigung-, Wartungs- und/oder Reparaturinformation Info dadurch verschieden, dass die Reinigung-, Wartungs- und/oder Reparaturinformation Info eine der, insbesondere Arten von, Komponenten 4a, 4b, 4c betreffend, insbesondere artspezifisch, ist.

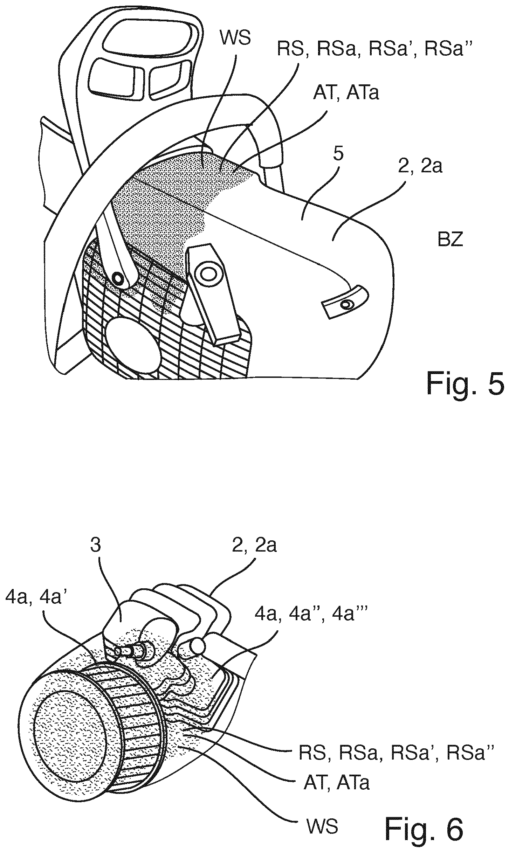

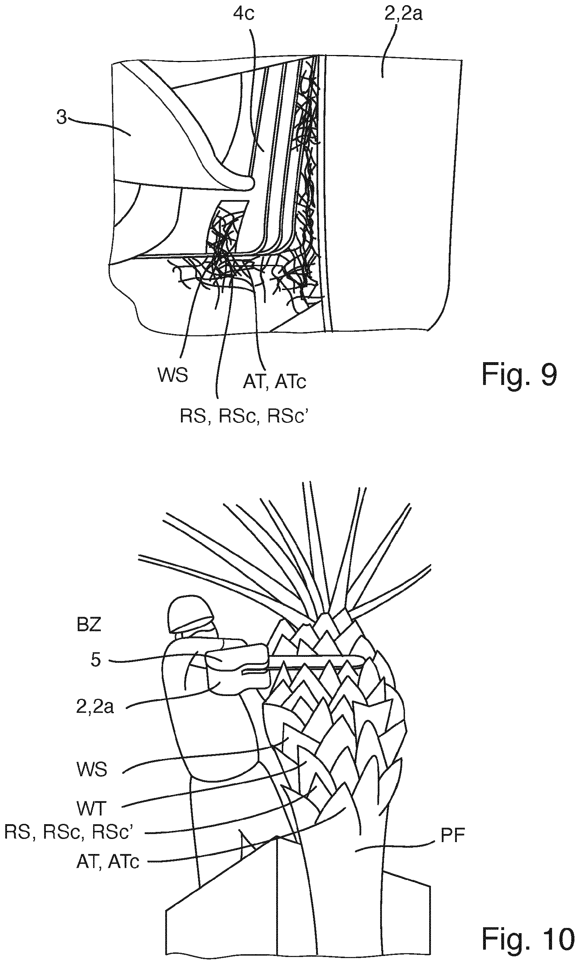

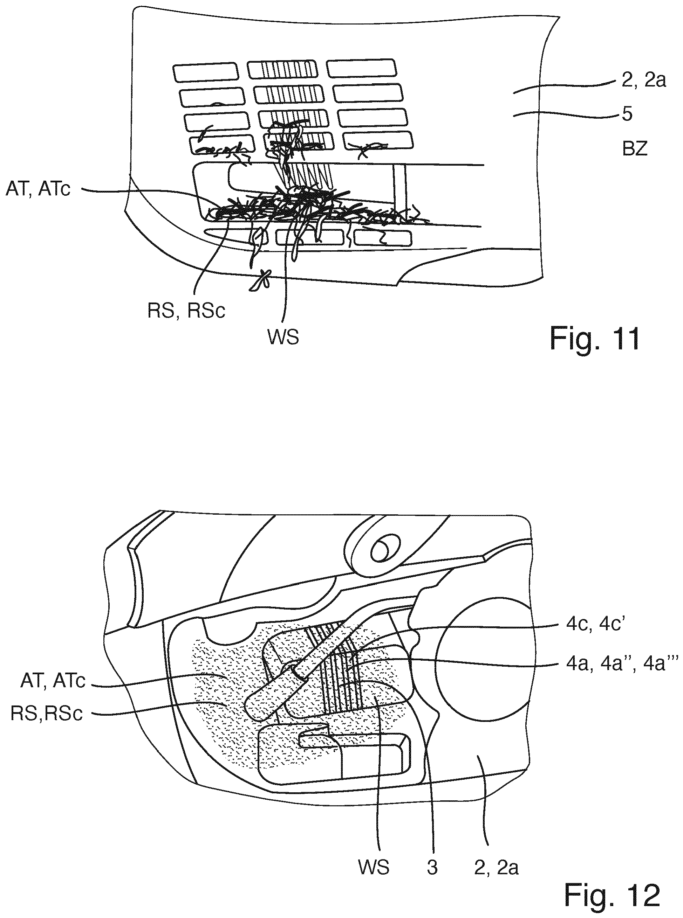

Im Detail weisen die verschiedenen Arten von Komponenten 4a, 4b, 4c eine Luft- und/oder Kühl-Komponente 4a, insbesondere einen Vorabscheider 4a' an einem Lüfterrad und/oder einen Kühlkörper 4a", insbesondere Kühlrippen 4a‴, an einem Motorzylinder, wie in Fig. 6 und 12 gezeigt, eine Ventil- und/oder Dichtungs-Komponente 4b, insbesondere ein Kraftstoffeinlassventil 4b' und/oder eine Radialwellendichtung 4b", wie in Fig. 4 gezeigt, und/oder eine Luftführungs-Komponente 4c, insbesondere an dem Motorzylinder und/oder einem Schalldämpfer, wie in Fig. 9 und 12 gezeigt, auf.

Zudem weist das Bearbeitungswerkzeug 2, insbesondere das Motorantriebssystem 3 des Bearbeitungswerkzeugs 2, eine, insbesondere die, Anzahl von Komponenten 4a, 4b, 4c auf. Die Anzahl von Komponenten 4a, 4b, 4c ist in einem bestimmungsgemäßen Betriebszustand BZ des Bearbeitungswerkzeugs 2, insbesondere durch ein Gehäuse 5, insbesondere ein Außengehäuse, des Bearbeitungswerkzeugs 2 mindestens teilweise oder vollständig abgedeckt, von außen optisch nicht erfassbar. Die Reinigung-, Wartungs- und/oder Reparaturinformation Info ist eine der Anzahl von Komponenten 4a, 4b, 4c betreffend.

In Fig. 1, 5, 6 und 8 bis 12 ist der Rückstand RS eines Werkstoffs WS eines Werkstücks WT verursacht durch eine Bearbeitung des Werkstücks WT mittels des Bearbeitungswerkzeugs 2.

Insbesondere ist das Werkstück WT ein Pflanzenstück, insbesondere ein Baum und/oder ein Holzstück.

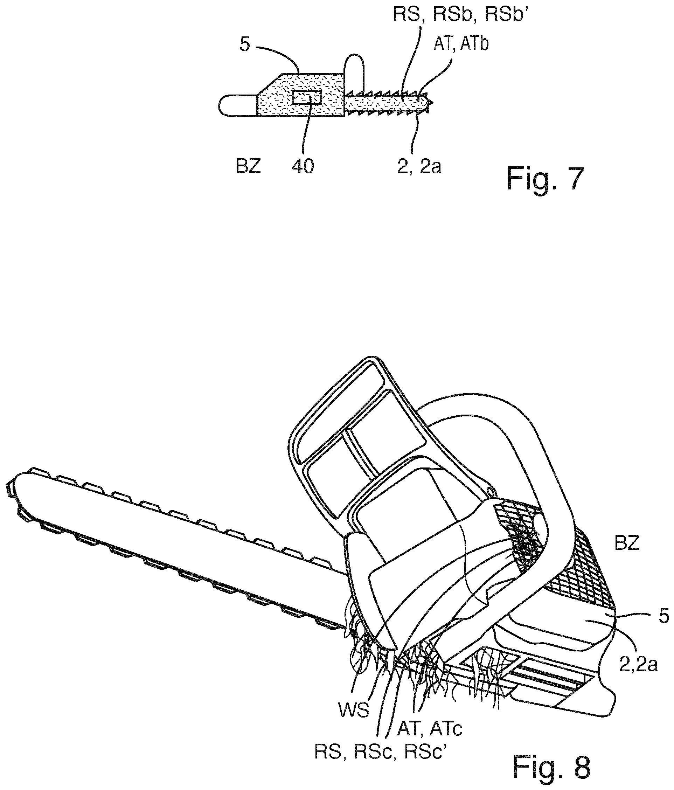

Des Weiteren ist der Rückstand RS aus einer Menge von verschiedenen Arten ATa, ATb, ATc von Rückständen RSa, RSb, RSc. Die verschiedenen Arten ATa, ATb, ATc von Rückständen RSa, RSb, RSc weisen einen Pflanzensaft-Rückstand RSa, insbesondere ein Harz RSa`, Insbesondere in Verbindung mit einem pflanzlichen Staub RSa", wie in Fig. 1, 5 und 6 gezeigt, einen abrasiven Staub-Rückstand RSb, insbesondere einen mineralischen Staub RSb`, wie in Fig. 4 und 7 gezeigt, und/oder einen Pflanzenfaser- und/oder Pflanzenspan-Rückstand RSc, insbesondere in Verbindung mit einem durch eine Pflanze PF gesammelten Schmutz RSc`, wie in Fig. 1 und 8 bis 12 gezeigt, auf.

Insbesondere kann der pflanzliche Staub RSa" ein, insbesondere schwarzer, Käferholzstaub sein, wie er typischerweise beim Fällen und Entasten auftreten kann.

Der abrasive Staub-Rückstand RSb, insbesondere der mineralische Staub RSb`, kann durch Aufwirbeln beim bodennahen Arbeiten auftreten, z.B. häufig in Spanien zu beobachten.

Der Pflanzenfaser-Rückstand RSc, insbesondere in Verbindung mit dem durch die Pflanze PF gesammelten Schmutz RSc`, kann beim Pflegen von Palmen auftreten. Insbesondere können die Palmen in ihren Trichtern den Schmutz RSc' sammeln.

Der Pflanzenspan-Rückstand RSc kann ein Nadelholzspan-Rückstand sein und/oder beim Beisägen von, insbesondere großen, Wurzelanläufen (Englisch: cutting, in particular large, buttress roots), beim Entasten und beim Blockhaus Bauen auftreten.

Außerdem kann ein Rückstand RSa derselben Art ATa wie der Pflanzensaft-Rückstand RSa die Luft- und/oder Kühl-Komponente 4a, insbesondere bis zu dem Motorzylinder hin und/oder an diesem, betreffen, insbesondere an dieser anhaften. Insbesondere kann dies zu einem Fehlersymptom FS in Form von Laufproblemen führen. Ohne Reinigung kann dies zu einer unzureichenden Kühlung bzw. einer Überhitzung und somit zu einer Fehlerursache FU in Form eines Motorschadens, insbesondere eines Kolbenfressers, führen.

Ein Rückstand RSb derselben Art ATb wie der abrasive Staub-Rückstand RSb kann die Ventil- und/oder Dichtungs-Komponente 4b betreffen, insbesondere verschleißen und/oder undicht machen.

Ein Rückstand RSc derselben Art ATc wie der Pflanzenfaser- und/oder Pflanzenspan-Rückstand RSc kann die Luftführungs-Komponente 4c, insbesondere an dem Motorzylinder und/oder von diesem weg, betreffen, insbesondere zusetzen bzw. versperren bzw. verstopfen. Insbesondere kann dies zu einem Fehlersymptom FS in Form von Laufproblemen führen. Ohne Reinigung kann dies zu einem Hitzestau und somit zu einer Überhitzung und somit zu einer Fehlerursache FU in Form eines Motorschadens, insbesondere eines Kolbenfressers, führen.

In dem gezeigten Ausführungsbeispiel ist das Motorantriebssystem 3 ein Verbrennungsmotorantriebssystem. In alternativen Ausführungsbeispielen kann das Motorantriebssystem zusätzlich oder alternativ ein Elektromotorantriebssystem sein. Insbesondere kann eine Komponente des Elektroantriebsmotorsystems einen Magnetkern aufweisen, insbesondere sein. Zusätzlich oder alternativ können die verschiedenen Arten von Rückständen einen Metall-Rückstand, insbesondere Metallspäne aufweisen. Insbesondere kann ein Rückstand derselben Art wie der Metall-Rückstand die Komponente des Elektroantriebsmotorsystems, insbesondere den Magnetkern, betreffen, insbesondere an diesem anhaften.

Weiter weist das Verfahren den Schritt auf: Ermitteln, insbesondere Erfassen, von Diagnosedaten DD, insbesondere Fehlerdaten FD, des Bearbeitungswerkzeugs 2. Die ermittelten Diagnosedaten DD sind zu dem erfassten Rückstand RS und/oder der Klassierung komplementär. Der Schritt c) weist auf: Bestimmen der Reinigung-, Wartungs- und/oder Reparaturinformation Info mittels Verknüpfens der ermittelten Diagnosedaten DD und der Klassierung, insbesondere mittels der Bestimmungseinrichtung 13.

In dem gezeigten Ausführungsbeispiel weist das Bearbeitungswerkzeug 2 einen Diagnosedatenspeicher 40 zum Speichern der Diagnosedaten DD auf, wie in Fig. 1 und 4 gezeigt.

Die Bestimmungseinrichtung 13 und der Diagnosedatenspeicher 40 sind zum, insbesondere kabellosen, Übertragen der Diagnosedaten DD ausgebildet, insbesondere übertragen.

Insbesondere können die Diagnosedaten DD auf eine, insbesondere nicht-bestimmungsgemäße, Erhitzung, insbesondere eine Überhitzung, des Motorantriebssystems 3 hindeuten, insbesondere hinweisen. Durch Verknüpfung mit der Klassierung, insbesondere des Rückstands RSa und/oder des Rückstands RSc, kann die Reinigung-, Wartungs- und/oder Reparaturinformation Info, insbesondere die Luft- und/oder Kühl-Komponente 4a und/oder die Luftführungs-Komponente 4c betreffend, bestimmt werden.

Die Diagnosedaten DD können auf einen Verschleiß und/oder eine Undichtigkeit hindeuten, insbesondere hinweisen. Durch Verknüpfung mit der Klassierung, insbesondere des Rückstands RSb, kann die Reinigung-, Wartungs- und/oder Reparaturinformation Info, insbesondere die Ventil- und/oder Dichtungs-Komponente 4b betreffend, bestimmt werden.

Zudem weist der Schritt c) auf: Selektieren der Reinigung-, Wartungs- und/oder Reparaturinformation Info aus einer Menge von verschiedenen Reinigung-, Wartungs- und/oder Reparaturinformationen Infoa, Infob, Infoc, Infod, insbesondere mittels der Bestimmungseinrichtung 13, wie in Fig. 3 gezeigt. Den Reinigung-, Wartungs- und/oder Reparaturinformationen Infoa, Infob, Infoc, Infod sind jeweils eine Art ATa, ATb eines Rückstands RSa, RSb aus einer Menge von verschiedenen Arten ATa, ATb von Rückständen RSa, RSb, insbesondere und Diagnosedaten DDa, DDb aus einer Menge von verschiedenen Diagnosedaten DDa, DDb, zugeordnet.

Des Weiteren weist das Verfahren die Schritte auf: Ermitteln, insbesondere Erfassen, einer wirksamen, insbesondere tatsächlichen, Reinigung-, Wartungs- und/oder Reparaturinformation wlnfo, wie in Fig. 4 gezeigt. Zuordnen der Art AT des Rückstands RS zu der ermittelten wirksamen Reinigung-, Wartungs- und/oder Reparaturinformation wlnfo für ein nächstes Ausführen des Verfahrens, insbesondere mittels der Bestimmungseinrichtung 13.

In dem gezeigten Ausführungsbeispiel bestätigt oder ändert der Reparateur die wirksame Reinigung-, Wartungs- und/oder Reparaturinformation wlnfo, insbesondere durch Betätigen einer Eingabeeinrichtung 60, insbesondere in Form eines Touchscreens, insbesondere des Systems 1, insbesondere des Geräts 35.

Außerdem weist die Reinigung-, Wartungs- und/oder Reparaturinformation Info eine Reinigung-, Wartungs- und/oder Reparaturhandlungsanweisung RA und/oder ein Ersatzteil ET für das Bearbeitungswerkzeug 2 und/oder ein, insbesondere das, Fehlersymptom FS und/oder eine, insbesondere die, Fehlerursache FU des Bearbeitungswerkzeugs 2 und/oder die betroffene Komponente 4a, 4b, 4c auf. Zusätzlich oder alternativ kann die Reinigung-, Wartungs- und/oder Reparaturinformation ein Zubehörteil, insbesondere eine Nennung bzw. eine Empfehlung des Zubehörteils, wie z.B. ein zusätzliches Luftfiltergitter, für das Bearbeitungswerkzeug aufweisen.

Weiter weist das System 1 ein, insbesondere das, Ersatzteil ET für das Bearbeitungswerkzeug 2 auf.

Wie die gezeigten und oben erläuterten Ausführungsbeispiele deutlich machen, stellt die Erfindung ein vorteilhaftes Verfahren zum automatisierten Ermitteln einer Reinigungs-, Wartungs- und/oder Reparaturinformation für ein motorangetriebenes Bearbeitungswerkzeug und ein vorteilhaftes System zum automatisierten Ermitteln einer Reinigungs-, Wartungs- und/oder Reparaturinformation für ein motorangetriebenes Bearbeitungswerkzeug bereit, insbesondere das jeweils verbesserte Eigenschaften aufweist.

## Patentansprüche

1. Verfahren zum automatisierten Ermitteln einer Reinigungs-, Wartungs- und/oder Reparaturinformation (Info) für ein motorangetriebenes Bearbeitungswerkzeug (2), wobei das Bearbeitungswerkzeug (2) von außen optisch erfassbar einen Rückstand (RS) verursacht während des Betriebs des Bearbeitungswerkzeugs (2) aufweist, wobei das Verfahren die Schritte aufweist:
a) Optisches Erfassen des Rückstands (RS) mittels einer optischen Erfassungseinrichtung (11),
b) Klassieren des erfassten Rückstands (RS) nach einer Art (AT) des Rückstands (RS) mittels einer Klassierungseinrichtung (12),
c) Bestimmen der Reinigung-, Wartungs- und/oder Reparaturinformation (Info) basierend auf der Klassierung mittels einer Bestimmungseinrichtung (13) und
d) Ausgeben der bestimmten Reinigung-, Wartungs- und/oder Reparaturinformation (Info) mittels einer Ausgabeeinrichtung (14).

2. Verfahren nach Anspruch 1,
- wobei das Bearbeitungswerkzeug (2), insbesondere ein Motorantriebssystem (3) des Bearbeitungswerkzeugs (2), verschiedene Arten von Komponenten (4a, 4b, 4c) aufweist,
- wobei je nach Art (ATa, ATb, ATc) des Rückstands (RSa, RSb, RSc) und/oder Klassierung die Reinigung-, Wartungs- und/oder Reparaturinformation (Info) dadurch verschieden ist, dass die Reinigung-, Wartungs- und/oder Reparaturinformation (Info) eine der, insbesondere Arten von, Komponenten (4a, 4b, 4c) betreffend, insbesondere artspezifisch, ist.

3. Verfahren nach Anspruch 2,
- wobei die verschiedenen Arten von Komponenten (4a, 4b, 4c) eine Luft- und/oder Kühl-Komponente (4a), insbesondere einen Vorabscheider (4a') an einem Lüfterrad und/oder einen Kühlkörper (4a"), insbesondere Kühlrippen (4a‴), an einem Motorzylinder, eine Ventil- und/oder Dichtungs-Komponente (4b), insbesondere ein Kraftstoffeinlassventil (4b') und/oder eine Radialwellendichtung (4b"), und/oder eine Luftführungs-Komponente (4c), insbesondere an einem Lufteinlass und/oder einem Motorzylinder und/oder einem Schalldämpfer, aufweisen.

4. Verfahren nach einem der vorhergehenden Ansprüche,
- wobei das Bearbeitungswerkzeug (2), insbesondere ein Motorantriebssystem (3) des Bearbeitungswerkzeugs (2), eine Anzahl von Komponenten (4a, 4b, 4c) aufweist,
- wobei die Anzahl von Komponenten (4a, 4b, 4c) in einem bestimmungsgemäßen Betriebszustand (BZ) des Bearbeitungswerkzeugs (2), insbesondere durch ein Gehäuse (5) des Bearbeitungswerkzeugs (2) mindestens teilweise oder vollständig abgedeckt, von außen optisch nicht erfassbar ist, und
- wobei die Reinigung-, Wartungs- und/oder Reparaturinformation (Info) eine der Anzahl von Komponenten (4a, 4b, 4c) betreffend ist.

5. Verfahren nach einem der vorhergehenden Ansprüche,
- wobei der Rückstand (RS) eines Werkstoffs (WS) eines Werkstücks (WT) verursacht durch eine Bearbeitung des Werkstücks (WT) mittels des Bearbeitungswerkzeugs (2) ist.

6. Verfahren nach einem der vorhergehenden Ansprüche, insbesondere nach Anspruch 5,
- wobei der Rückstand (RS) aus einer Menge von verschiedenen Arten (ATa, ATb, ATc) von Rückständen (RSa, RSb, RSc) ist, wobei die verschiedenen Arten (ATa, ATb, ATc) von Rückständen (RSa, RSb, RSc) einen Pflanzensaft-Rückstand (RSa), insbesondere ein Harz (RSa'), Insbesondere in Verbindung mit einem pflanzlichen Staub (RSa"), einen abrasiven Staub-Rückstand (RSb), insbesondere einen mineralischen Staub (RSb'), und/oder einen Pflanzenfaser- und/oder Pflanzenspan-Rückstand (RSc), insbesondere in Verbindung mit einem durch eine Pflanze (PF) gesammelten Schmutz (RSc'), aufweisen.

7. Verfahren nach einem der vorhergehenden Ansprüche,
- wobei das Bearbeitungswerkzeug (2) eine Säge (2a), ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer, eine Grasschere, ein Häcksler, ein Gesteinsschneider, ein Hochdruckreiniger oder ein Spritz- und/oder Sprühgerät ist.

8. Verfahren nach einem der vorhergehenden Ansprüche,
- wobei das Verfahren den Schritt aufweist: Ermitteln, insbesondere Erfassen, von Diagnosedaten (DD), insbesondere Fehlerdaten (FD), des Bearbeitungswerkzeugs (2), wobei die ermittelten Diagnosedaten (DD) zu dem erfassten Rückstand (RS) und/oder der Klassierung komplementär sind, und
- wobei der Schritt c) aufweist: Bestimmen der Reinigung-, Wartungs- und/oder Reparaturinformation (Info) mittels Verknüpfens der ermittelten Diagnosedaten (DD) und der Klassierung.

9. Verfahren nach einem der vorhergehenden Ansprüche, insbesondere nach Anspruch 8,
- wobei der Schritt c) aufweist: Selektieren der Reinigung-, Wartungs- und/oder Reparaturinformation (Info) aus einer Menge von verschiedenen Reinigung-, Wartungs- und/oder Reparaturinformationen (Infoa, Infob, Infoc, Infod), wobei den Reinigung-, Wartungs- und/oder Reparaturinformationen (Infoa, Infob, Infoc, Infod) jeweils eine Art (ATa, ATb) eines Rückstands (RSa, RSb) aus einer Menge von verschiedenen Arten (ATa, ATb) von Rückständen (RSa, RSb), insbesondere und Diagnosedaten (DDa, DDb) aus einer Menge von verschiedenen Diagnosedaten (DDa, DDb), zugeordnet sind.

10. Verfahren nach Anspruch 9, wobei das Verfahren die Schritte aufweist:
- Ermitteln, insbesondere Erfassen, einer wirksamen, insbesondere tatsächlichen, Reinigung-, Wartungs- und/oder Reparaturinformation (wlnfo), und
- Zuordnen der Art (AT) des Rückstands (RS) zu der ermittelten wirksamen Reinigung-, Wartungs- und/oder Reparaturinformation (wlnfo) für ein nächstes Ausführen des Verfahrens.

11. Verfahren nach einem der vorhergehenden Ansprüche, insbesondere nach Anspruch 2,
- wobei die Reinigung-, Wartungs- und/oder Reparaturinformation (Info) eine Reinigung-, Wartungs- und/oder Reparaturhandlungsanweisung (RA) und/oder ein Ersatzteil (ET) für das Bearbeitungswerkzeug (2) und/oder ein Fehlersymptom (FS) und/oder eine Fehlerursache (FU) des Bearbeitungswerkzeugs (2) und/oder die betroffene Komponente (4a, 4b, 4c) aufweist.

12. System (1) zum automatisierten Ermitteln einer Reinigungs-, Wartungs- und/oder Reparaturinformation (Info) für ein motorangetriebenes Bearbeitungswerkzeug (2), wobei das Bearbeitungswerkzeug (2) von außen optisch erfassbar einen Rückstand (RS) verursacht während des Betriebs des Bearbeitungswerkzeugs (2) aufweist, insbesondere zum Ausführen eines Verfahrens nach einem der vorhergehenden Ansprüche, wobei das System (1) aufweist:
- eine optische Erfassungseinrichtung (11), wobei die optische Erfassungseinrichtung (11) zum optischen Erfassen des Rückstands (RS) ausgebildet ist,
- eine Klassierungseinrichtung (12), wobei die Klassierungseinrichtung (12) zum Klassieren des erfassten Rückstands (RS) nach einer Art (AT) des Rückstands (RS) ausgebildet ist,
- eine Bestimmungseinrichtung (13), wobei die Bestimmungseinrichtung (13) zum Bestimmen der Reinigung-, Wartungs- und/oder Reparaturinformation (Info) basierend auf der Klassierung ausgebildet ist, und
- eine Ausgabeeinrichtung (14), wobei die Ausgabeeinrichtung (14) zum Ausgeben der bestimmten Reinigung-, Wartungs- und/oder Reparaturinformation (Info) ausgebildet ist.

13. System (1) nach Anspruch 12, wobei das System (1) aufweist:
- ein mobiles Gerät (15), wobei das Gerät (15) die optische Erfassungseinrichtung (11) und/oder die Ausgabeeinrichtung (14) aufweist.

14. System (1) nach Anspruch 12 oder 13, wobei das System (1) aufweist:
- das Bearbeitungswerkzeug (2) und/oder
- ein Ersatzteil (ET) für das Bearbeitungswerkzeug (2).

## Claims

1. Method for automatically ascertaining cleaning, maintenance and/or repair information (Info) for a motor-driven treatment tool (2), wherein the treatment tool (2) comprises a residue (RS), able to be detected externally optically, caused during the operation of the treatment tool (2), wherein the method involves the steps of:
a) Optically detecting the residue (RS) by means of an optical detection unit (11),
b) Classing the detected residue (RS) in accordance with a type (AT) of the residue (RS) by means of a classing unit (12),
c) Determining the cleaning, maintenance and/or repair information (Info) based on the classing by means of a determination unit (13), and
d) Outputting the determined cleaning, maintenance and/or repair information (Info) by means of an output unit (14).

2. Method according to Claim 1,
- wherein the treatment tool (2), in particular a motorized drive system (3) of the treatment tool (2), comprises different types of components (4a, 4b, 4c),
- wherein, depending on the type (ATa, ATb, ATc) of the residue (RSa, RSb, RSc) and/or classing, the cleaning, maintenance and/or repair information (Info) differs in that the cleaning, maintenance and/or repair information (Info) is relevant, in particular type-specific, to one of the in particular types of components (4a, 4b, 4c).

3. Method according to Claim 2,
- wherein the different types of components (4a, 4b, 4c) include a ventilation and/or cooling component (4a), in particular a preseparator (4a') on a fan wheel and/or a heat sink (4a"), in particular cooling fins (4a'''), on an engine cylinder, a valve and/or sealing component (4b), in particular a fuel inlet valve (4b') and/or a radial shaft seal (4b"), and/or an air guidance component (4c), in particular on an air inlet and/or an engine cylinder and/or a silencer.

4. Method according to one of the preceding claims,
- wherein the treatment tool (2), in particular a motorized drive system (3) of the treatment tool (2), comprises a number of components (4a, 4b, 4c),
- wherein the number of components (4a, 4b, 4c) is not able to be externally optically detected in an intended operating state (BZ) of the treatment tool (2), in particular is at least partially or completely concealed by a housing (5) of the treatment tool (2), and
- wherein the cleaning, maintenance and/or repair information (Info) is relevant to one of the number of components (4a, 4b, 4c).

5. Method according to one of the preceding claims,
- wherein the residue (RS) of a material (WS) of a workpiece (WT) is caused by treatment of the workpiece (WT) by way of the treatment tool (2).

6. Method according to one of the preceding claims, in particular according to Claim 5,
- wherein the residue (RS) is from a set of different types (ATa, ATb, ATc) of residues (RSa, RSb, RSc), wherein the different types (ATa, ATb, ATc) of residues (RSa, RSb, RSc) include a sap residue (RSa), in particular a resin (RSa'), in particular in connection with a plant-based dust (RSa"), an abrasive dust residue (RSb), in particular a mineral dust (RSb'), and/or a plant-based fibre and/or plant-based chip residue (RSc), in particular in connection with dirt (RSc') collected by a plant (PF) .

7. Method according to one of the preceding claims,
- wherein the treatment tool (2) is a saw (2a), a pruner, a brush cutter, a hedge trimmer, a hedge cutter, a blower, a leaf blower, a set of pruning shears, an abrasive cutter, a sweeper, a sweeper roller, a sweeping brush, a lawnmower, a scarifier, a grass trimmer, a shredder, a stonecutter, a pressure washer or a spraying device and/or sprayer.

8. Method according to one of the preceding claims,
- wherein the method involves the step of: Ascertaining, in particular acquiring, diagnostic data (DD), in particular fault data (FD), of the treatment tool (2), wherein the ascertained diagnostic data (DD) are complementary to the detected residue (RS) and/or the classing, and
- wherein step c) involves: Determining the cleaning, maintenance and/or repair information (Info) by way of linking the ascertained diagnostic data (DD) and the classing.

9. Method according to one of the preceding claims, in particular according to Claim 8,
- wherein step c) involves: Selecting the cleaning, maintenance and/or repair information (Info) from a set of different cleaning, maintenance and/or repair information (Infoa, Infob, Infoc, Infod), wherein the cleaning, maintenance and/or repair information (Infoa, Infob, Infoc, Infod) is in each case assigned a type (ATa, ATb) of a residue (RSa, RSb) from a set of different types (ATa, ATb) of residues (RSa, RSb), in particular and diagnostic data (DDa, DDb) from a set of different diagnostic data (DDa, DDb) .

10. Method according to Claim 9, wherein the method involves the steps of:
- Ascertaining, in particular acquiring, effective, in particular actual, cleaning, maintenance and/or repair information (winfo), and
- Assigning the type (AT) of the residue (RS) to the ascertained effective cleaning, maintenance and/or repair information (winfo) for a next performance of the method.

11. Method according to one of the preceding claims, in particular according to Claim 2,
- wherein the cleaning, maintenance and/or repair information (Info) comprises a cleaning, maintenance and/or repair operation instruction (RA) and/or a replacement part (ET) for the treatment tool (2) and/or a fault symptom (FS) and/or a fault cause (FU) of the treatment tool (2) and/or the relevant component (4a, 4b, 4c).

12. System (1) for automatically ascertaining cleaning, maintenance and/or repair information (Info) for a motor-driven treatment tool (2), wherein the treatment tool (2) comprises a residue (RS), able to be detected externally optically, caused during the operation of the treatment tool (2), in particular for performing a method according to one of the preceding claims, wherein the system (1) comprises:
- an optical detection unit (11), wherein the optical detection unit (11) is designed to optically detect the residue (RS),
- a classing unit (12), wherein the classing unit (12) is designed to class the detected residue (RS) in accordance with a type (AT) of the residue (RS),
- a determination unit (13), wherein the determination unit (13) is designed to determine the cleaning, maintenance and/or repair information (Info) based on the classing, and
- an output unit (14), wherein the output unit (14) is designed to output the determined cleaning, maintenance and/or repair information (Info).

13. System (1) according to Claim 12, wherein the system (1) comprises:
- a mobile device (15), wherein the device (15) comprises the optical detection unit (11) and/or the output unit (14).

14. System (1) according to Claim 12 or 13, wherein the system (1) comprises:
- the treatment tool (2) and/or
- a replacement part (ET) for the treatment tool (2).

## Revendications

1. Procédé de détermination automatique d'informations (Info) de nettoyage, d'entretien et/ou de réparation d'un outil de traitement (2) entraîné par moteur, l'outil de traitement (2) comportant un résidu (RS) détectable optiquement depuis l'extérieur et généré pendant le fonctionnement de l'outil de traitement (2), le procédé comprenant les étapes suivantes :
a) détecter optiquement le résidu (RS) au moyen d'un dispositif de détection optique (11),
b) classer le résidu détecté (RS) selon le type (AT) du résidu (RS) au moyen d'un dispositif de classement (12),
c) déterminer l'information (Info) de nettoyage, d'entretien et/ou de réparation sur la base du classement au moyen d'un dispositif de détermination (13), et
d) délivrer l'information (Info) de nettoyage, d'entretien et/ou de réparation déterminée au moyen d'un dispositif de délivrance (14).

2. Procédé selon la revendication 1,
- l'outil de traitement (2), en particulier un système d'entraînement par moteur (3) de l'outil de traitement (2), comportant différents types de composants (4a, 4b, 4c),
- selon le type (ATa, ATb, ATc) du résidu (RSa, RSb, RSc) et/ou selon le classement, l'information (Info) de nettoyage, d'entretien et/ou de réparation différant en ce que l'information (Info) de nettoyage, d'entretien et/ou de réparation concerne l'un des composants, en particulier l'un des types de composants, (4a, 4b, 4c), en particulier est spécifique à un type.

3. Procédé selon la revendication 2,
- les différents types de composants (4a, 4b, 4c) comportant un composant à air et/ou de refroidissement (4a), en particulier un pré-séparateur (4a') sur une roue de ventilateur et/ou un radiateur (4a"), en particulier des nervures de refroidissement (4a'''), sur un cylindre moteur, un composant de soupape et/ou de garniture d'étanchéité (4b), en particulier une soupape d'admission de carburant (4b') et/ou une garniture d'étanchéité d'arbre radial (4b''), et/ou un composant de guidage d'air (4c), notamment sur une entrée d'air et/ou un cylindre moteur et/ou un silencieux.

4. Procédé selon l'une des revendications précédentes,
- l'outil de traitement (2), en particulier un système d'entraînement par moteur (3) de l'outil de traitement (2), comportant un certain nombre de composants (4a, 4b, 4c),
- ledit nombre de composants (4a, 4b, 4c) dans un état de fonctionnement prévu (BZ) de l'outil de traitement (2), notamment recouvert au moins partiellement ou totalement par un boîtier (5) de l'outil de traitement (2), ne pouvant pas être détecté optiquement de l'extérieur, et
- l'information (Info) de nettoyage, d'entretien et/ou de réparation concernant un composant parmi ledit nombre de composants (4a, 4b, 4c).

5. Procédé selon l'une des revendications précédentes,
- le résidu (RS) d'un matériau (WS) d'une pièce (WT) étant généré par le traitement de la pièce (WT) à l'aide de l'outil de traitement (2).

6. Procédé selon l'une des revendications précédentes, notamment selon la revendication 5,
- le résidu (RS) provenant d'un ensemble de différents types (ATa, ATb, ATc) de résidus (RSa, RSb, RSc), les différents types (ATa, ATb, ATc) de résidus (RSa, RSb, RSc) étant un résidu de sève végétale (RSa), notamment une résine (RSa'), notamment en liaison avec une poussière végétale (RSa''), un résidu de poussière abrasive (RSb), en particulier une poussière minérale (RSb'), et/ou un résidu de fibres végétales et/ou de copeaux végétaux (RSc), notamment en liaison avec une impureté (RSc') collectée par une plante (PF).

7. Procédé selon l'une des revendications précédentes,
- l'outil de traitement (2) étant une scie (2a), une élagueuse, une débroussailleuse, un sécateur à haie, un taille-haie, un souffleur, un souffleur de feuilles, un sécateur à branches, une meuleuse de tronçonnage, une balayeuse, un rouleau de balayage, une brosse de balayage, une tondeuse à gazon, un scarificateur, une cisaille à gazon, un broyeur, un taille-pierre, un nettoyeur à haute pression ou un appareil de pulvérisation et/ou d'aspersion.

8. Procédé selon l'une des revendications précédentes,
- le procédé comportant l'étape suivante :
déterminer, en particulier acquérir, des données de diagnostic (DD), en particulier des données d'erreur (FD), de l'outil de traitement (2),
les données de diagnostic (DD) déterminées étant complémentaires du résidu détecté (RS) et/ou du classement, et
- l'étape c) comportant : la détermination de l'information (Info) de nettoyage, d'entretien et/ou de réparation par combinaison des données de diagnostic (DD) déterminées et du classement.

9. Procédé selon l'une des revendications précédentes, notamment selon la revendication 8,
- l'étape c) comportant : la sélection de l'information (Info) de nettoyage, d'entretien et/ou de réparation parmi un ensemble d'informations différentes (Infoa, Infob, Infoc, Infod) de nettoyage, d'entretien et/ou de réparation, les informations (Infoa, Infob, Infoc, Infod) de nettoyage, d'entretien et/ou de réparation étant associées chacune à un type (ATa, ATb) d'un résidu (RSa, RSb) parmi un ensemble de différents types (ATa, ATb) de résidus (RSa, RSb), en particulier, et de données de diagnostic (DDa, DDb) provenant d'un ensemble de différentes données de diagnostic (DDa, DDb) .

10. Procédé selon la revendication 9, le procédé comportant les étapes suivantes :
- déterminer, en particulier acquérir, une Information (wInfo) effective, en particulier réelle, de nettoyage, d'entretien et/ou de réparation, et
- associer le type (AT) du résidu (RS) à l'information (winfo) effective déterminée de nettoyage, d'entretien et/ou de réparation pour une prochaine mise en œuvre du procédé.

11. Procédé selon l'une des revendications précédentes, notamment selon la revendication 2,
- l'information (Info) de nettoyage, d'entretien et/ou de réparation comportant une instruction (RA) de nettoyage, d'entretien et/ou de réparation et/ou une pièce de rechange (ET) de l'outil de traitement (2) et/ou un symptôme d'erreur (FS) et/ou une cause d'erreur (FU) de l'outil de traitement (2) et/ou du composant concerné (4a, 4b, 4c).

12. Système (1) de détermination automatique d'une information (Info) de nettoyage, de maintenance et/ou de réparation d'un outil de traitement (2) entraîné par moteur, l'outil de traitement (2) comportant un résidu (RS) qui est détectable optiquement de l'extérieur et qui est généré lors du fonctionnement de l'outil de traitement (2), en particulier pour la mise en œuvre d'un procédé selon l'une des revendications précédentes, le système (1) comportant :
- un dispositif de détection optique (11), le dispositif de détection optique (11) étant conçu pour détecter optiquement le résidu (RS),
- un dispositif de classement (12), le dispositif de classement (12) étant conçu pour classer le résidu détecté (RS) selon le type (AT) du résidu (RS),
- un dispositif de détermination (13), le dispositif de détermination (13) étant conçu pour déterminer l'information (Info) de nettoyage, d'entretien et/ou de réparation sur la base du classement, et
- un dispositif de délivrance (14), le dispositif de délivrance (14) étant conçu pour délivrer l'information (Info) déterminée de nettoyage, d'entretien et/ou de réparation.

13. Système (1) selon la revendication 12, le système (1) comportant :
- un appareil mobile (15), l'appareil (15) comportant le dispositif de détection optique (11) et/ou le dispositif de délivrance (14).

14. Système (1) selon la revendication 12 ou 13, le système (1) comportant :
- l'outil de traitement (2) et/ou
- une pièce de rechange (ET) destinée à l'outil de traitement (2).
